# EUROPEAN PATENT SPECIFICATION

(11) **EP 3 431 712 B1**
(45) Date of publication and mention of the grant of the patent: **08.04.2020**
(21) Application number: 18184994.4
(22) Date of filing: 23.07.2018
(51) Int. Cl.: F01D 5/28, F01D 5/00, F04D 29/02, B23P 6/00, C23G 1/12, C25D 11/04, C25D 11/24, B05D 5/00, B05D 7/00

(54) **METHOD TO STRIP AND RECOAT EROSION COATINGS APPLIED TO FAN BLADES AND STRUCTURAL GUIDE VANES**
VERFAHREN ZUM ABZIEHEN UND ERNEUTEN BESCHICHTEN VON EROSIONSBESCHICHTUNGEN AUF GEBLÄSESCHAUFELN UND STRUKTURELLEN LEITSCHAUFELN
PROCÉDÉ DE DÉCAPAGE ET DE RECOUVREMENT DE REVÊTEMENTS RÉSISTANT À L'ÉROSION APPLIQUÉS SUR DES AUBES DE VENTILATEUR ET DES AUBES DIRECTRICES STRUCTURELLES

(30) Priority: 21.07.2017 US 201715656262
(43) Date of publication of application: 23.01.2019
(73) Proprietor: United Technologies Corporation, Farmington, CT 06032 (US)
(72) Inventor: RIEHL, John D., Hebron, CT Connecticut 06248 (US); BOGUE, William, Hebron, CT Connecticut 06248 (US); WIGELL, Gary A., Lansing, MI Michigan 48917 (US); HARNER, John, Vernon, CT Connecticut 06066 (US)
(74) Representative: Dehns

(56) References cited:
- EP-A1- 3 184 180
- EP-A2- 3 184 735
- US-A1- 2008 210 342

## Description

### BACKGROUND

The present disclosure is directed to a process to repair erosion coatings.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

Gas turbine engines have rows of circumferentially spaced airfoils mounted on respective rotor disks for rotation about an engine axis. Advanced configurations feature shroud-less hollow airfoils manufactured of lightweight materials. The airfoils are designed to high tolerances and typically include a coating to accommodate significant operational requirements.

Airfoil coatings erode over time and may be reapplied as part of a repair strategy. EP-A-3 184 735 and EP-A-3 184 180 disclose the local repair of polymeric erosion coatings.

### SUMMARY

In accordance with the present disclosure, there is provided a method of repairing a coating or an erosion coating coupled to a substrate wherein the coating comprises an anodization layer on the substrate, a bond primer layer on the anodization layer, a corrosion-resistant primer on the bond primer, and an erosion coating on the corrosion-resistant primer. The method comprises abrading an erosion coating; abrading a corrosion-resistant primer; creating an abraded surface comprising a bond primer over an anodization layer coupled to the substrate, chemically etching the anodization layer; abrading the bond primer; applying an anodization layer to the substrate; applying a bond primer layer over the anodization layer; applying a corrosion-resistant layer over the bond primer layer; and applying an erosion coating layer over the corrosion-resistant layer.

The abraded surface may comprise at least one of a bare metal substrate, an anodization layer over the substrate; a portion of a bond primer over the anodization layer over the substrate and an anodization layer over said substrate with a portion of a corrosion-resistant primer over a bond primer over said anodization layer over said substrate.

The abrading may be selected from the group consisting of mechanical abrasion, abrasive blast, grinding, sanding, and the like.

Applying the anodization layer to the substrate may comprise acid anodization on an assembled blade.

The step of chemically etching the anodization layer may comprise a chromic-phosphoric acid etch.

The chromic-phosphoric acid etch may facilitate mechanical removal of the bond primer layer in the absence of the anodization layer.

The chromic-phosphoric acid etch may comprise removing the anodization layer.

A sheath may remain coupled to a blade body and a blade or body cover may also be attached to a suction side of the blade body.

Other details of the process to repair erosion coatings are set forth in the following detailed description and the accompanying drawings wherein like reference numerals depict like elements.

### BRIEF DESCRIPTION OF THE DRAWINGS

FIG. 1 is a schematic cross-section of a gas turbine engine.
FIG. 2 is a schematic view of a fan blade for use in the gas turbine engine shown in FIG. 1.
FIG. 3 is a perspective view of a rotor disk with the fan blade of FIG. 2 installed.
FIG. 4 is a sectional view of a coating for the example fan blade of FIG. 2.
FIG. 5 is a process flow chart of an exemplary coating repair process.
FIG. 6 is a process flow chart of an exemplary coating repair process.
Fig. 7 is a schematic of an exemplary blade assembly.

### DETAILED DESCRIPTION

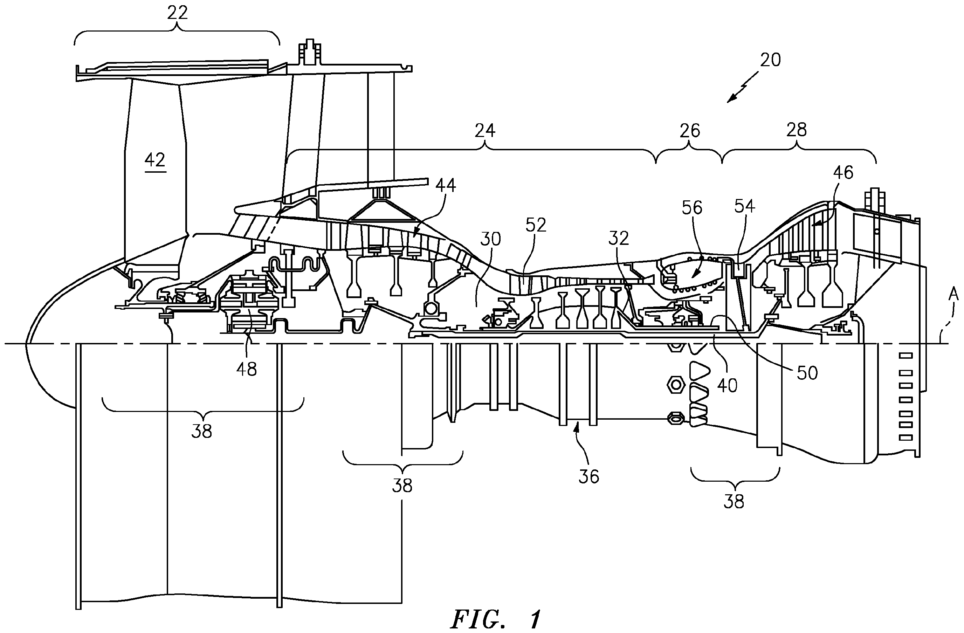

FIG. 1 schematically illustrates a gas turbine engine 20. The gas turbine engine 20 as disclosed herein has a two-spool turbofan that generally incorporates a fan section 22, a compressor section 24, a combustor section 26 and a turbine section 28. The fan section 22 drives air along a bypass flow path while the compressor section 24 drives air along a core flow path for compression and communication into the combustor section 26 then expansion through the turbine section 28. Although depicted as a turbofan in the disclosed non-limiting embodiment, it should be appreciated that the concepts described herein are not limited only thereto.

The engine 20 generally includes a low spool 30 and a high spool 32 mounted for rotation around an engine central longitudinal axis A relative to an engine static structure 36 via several bearing compartments 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. The high spool 32 includes an outer shaft 50 that interconnects a high pressure compressor 52 ("HPC") and high pressure turbine 54 ("HPT"). A combustor 56 is arranged between the HPC 52 and the HPT 54. The inner shaft 40 and the outer shaft 50 are concentric and rotate around the engine central longitudinal axis A which is collinear with their longitudinal axes.

Core airflow is compressed by the LPC 44 then the HPC 52, mixed with fuel and burned in the combustor 56, then expanded over the HPT 54 and the LPT 46. The turbines 46, 54 rotationally drive the respective low spool 30 and high spool 32 in response to the expansion. The main engine shafts 40, 50 are supported at a plurality of points by the bearing compartments 38. It should be appreciated that various bearing compartments 38 at various locations may alternatively or additionally be provided.

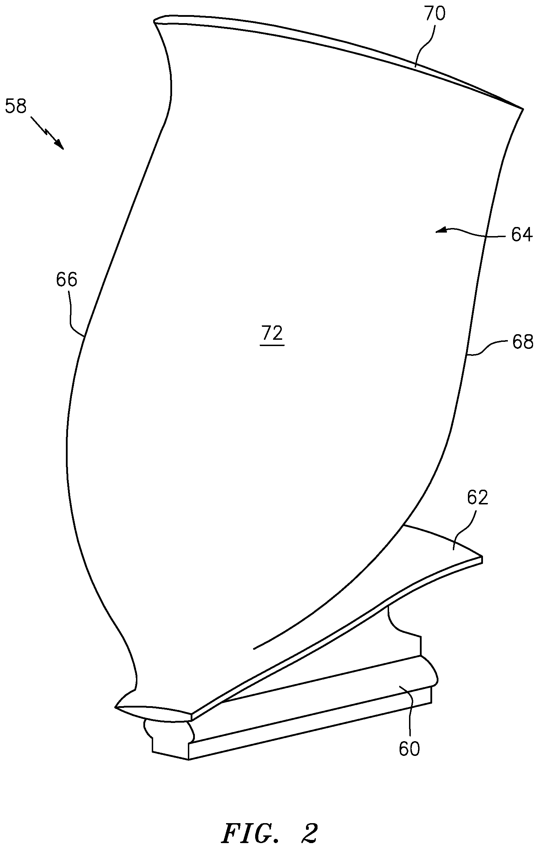

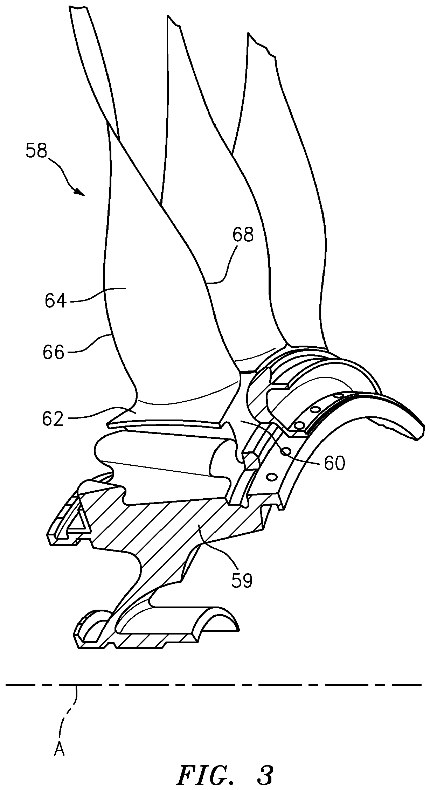

Referring also to Fig. 2 and 3, the fan section 22 includes a plurality of circumferentially spaced fan blades 58 which may be made of a high-strength, low weight material such as an aluminum alloy, titanium alloy, composite material or combinations thereof. It should be understood that although a single fan stage typical of a high bypass gas turbofan engine architecture is illustrated and described in the disclosed embodiment, other stages which have other blades inclusive but not limited to fan blades, high pressure compressor blades and low pressure compressor blades may also benefit from the disclosed process.

Each fan blade 58 generally includes an innermost root portion 60, an intermediate platform portion 62, and an outermost airfoil portion 64. In one form, the root portion 60 defines an attachment such as an inverted fir tree, bulb, or dovetail, so the fan blade 58 is slidably received in a complimentary configured recess provided in a fan rotor 59 (FIG. 3). The platform portion 62 generally separates the root portion 60 and the airfoil portion 64 to define an inner boundary of the air flow path. The airfoil portion 64 defines a blade chord between a leading edge 66, which may include various forward and/or aft sweep configurations, and a trailing edge 68. A concave pressure side 70 and a convex suction side 72 are defined between the leading edge 66 and the trailing edge 68. Although a fan blade 58 is illustrated in the disclosed non-limiting embodiment, compressor blades, turbofan blades, turboprop propeller blades, tilt rotor props, vanes, struts, and other airfoils may benefit from the disclosed process.

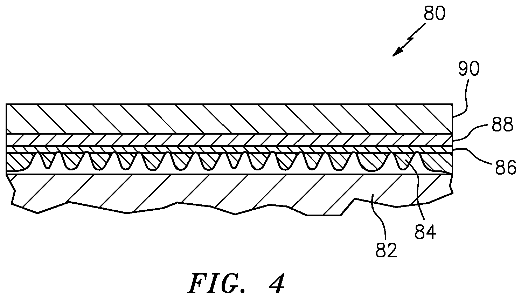

With reference to FIG. 4, a coating 80 is applied to a substrate 82 of the fan blade 58. The coating 80 generally comprises an anodization layer 84 comprising an anodization layer, a bond primer or bond primer layer 86, a corrosion resistant primer 88, and an erosion coating 90 coupled in layers.

The substrate 82, in this embodiment, is the fan blade 58 base metal (e.g., an aluminum alloy). The coating 80 protects the substrate 82 from corrosion, wear and other physical damage.

The anodization layer 84, in this embodiment, is defined as an oxide layer formed through a chemical anodization process. The anodization process changes the surface morphology of the aluminum at the surface and creates an anodization layer up to 0.0001 inches (0.00254mm) with a microscopic roughness that greatly increases the surface area for bonding and provides for some mechanical retention of bond primers.

The bond layer 86, in this embodiment, is an organic primer layer (e.g., epoxy-based) which may be spray-applied to a thickness of up to 0.0005 inches (0.0127mm). The bond layer 86 is applied to increase the bond strength between the underlying aluminum/anodization layer 84 and the subsequent primers and coatings.

The corrosion resistant primer 88, in this embodiment, is an epoxy-based material and is loaded with hexavalent chromium as the active corrosion-resistant component. Alternatively, the corrosion resistant primer 88 is a non-hexavalent chromium based corrosion-resistant primer. The corrosion-resistant primer 88 is applied up to a thickness of 0.001 inches (0.0254mm) to prevent corrosion of the underlying aluminum.

The erosion coating 90, in this embodiment, is an organic erosion coating (e.g., polyurethane) with a thickness of up to 0.030 inches (0.762mm). The erosion coating 90 protects the underlying primers and metal substrate from damage due to particle and rain impact.

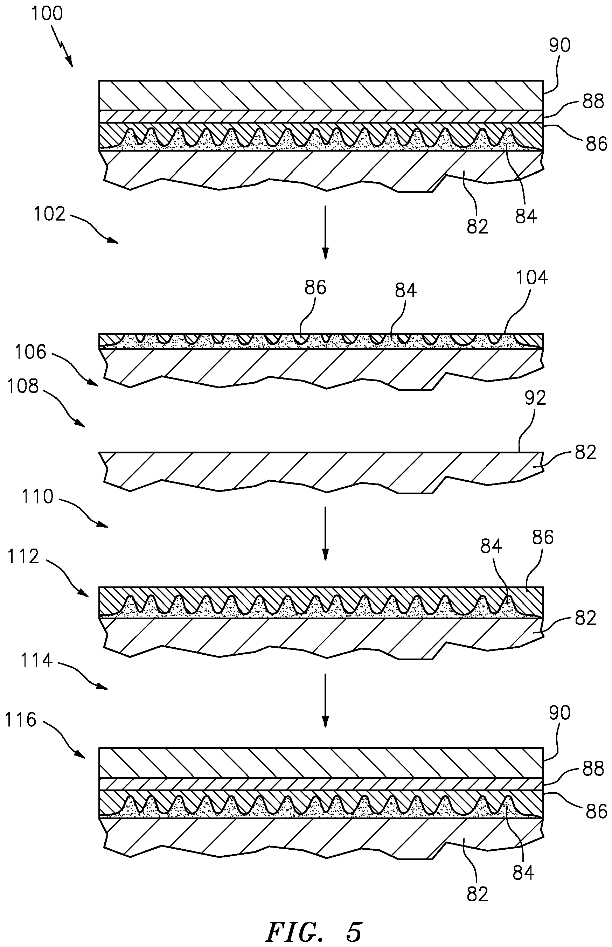

With reference to FIG. 5, a method 100 for repairing or remanufacturing the coating 80 is schematically disclosed in terms of a functional block diagram flowchart. It should be appreciated that alternative or additional steps may be provided without departing from the teaching herein. The coating 80 (FIG. 4) may not be up to specification during manufacture or may be damaged such that remanufacture or repair of the coating 80 is necessitated.

The coating 80 to be remanufactured or repaired is initially abraded (102) to leave an abraded surface 104. In an exemplary embodiment, at least the erosion coating layer 90, the corrosion-resistant primer layer 88, and at least a portion of the bond primer 86 can be removed by a variety of surface alteration and material removal techniques, such as for example, mechanical abrasion, abrasive blast, grinding, sanding, abrasion, laser ablation, waterjet stripping, flashlamp/CO₂ stripping, and the like. Examples of abrasion media can be aluminum oxide, glass, silicon carbide, sodium bicarbonate, plastic media, steel, walnut shells and the like. The resultant abraded surface 104 can be relatively rough in texture and be a mixed surface containing a bare metal substrate and material remnants of the abraded layers 84, 86, and 88. In an exemplary embodiment only the anodization layer 84 remains over the substrate 82. In other embodiments, portions of the bond primer 86 remain over portions of the anodization layer 84.

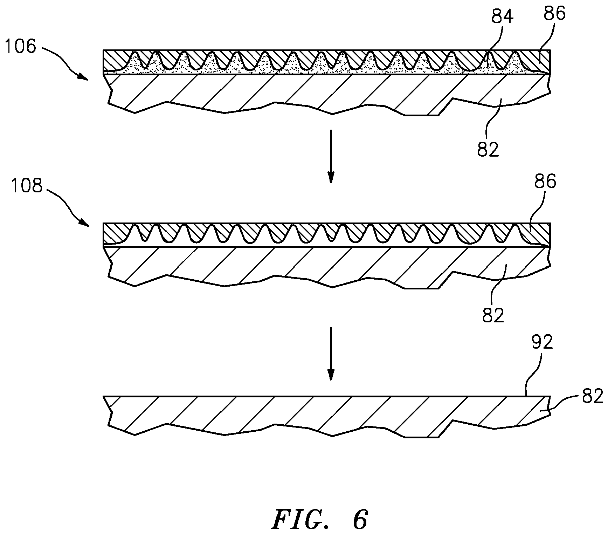

In an exemplary embodiment, the process of repair 100 aims to remove the remaining abraded surface 104 layers. As shown in Fig. 6, at step 106 a chemical etch is utilized to remove the anodization layer 84 from the surface of the substrate 82. The epoxy bond layer 86 is not removed by the chemical etching. In an exemplary embodiment, the chemical etching can comprise chromic-phosphoric acid etching (CPAE). The chromic-phosphoric acid etching performed in a bath can undercut the bond primer layer 86. Undercutting the bond primer 86 and removing the anodization layer 84, enables mechanical removal of the bond primer that is subsequently more easily mechanically removed.

At step 108 a second mechanical abrasion technique is applied to remove the remainder of the bond layer 86. In an exemplary embodiment, the mechanical abrasion can be done by hand, or other means. A bare substrate surface 92 is the result of the above steps 102 through 108. Steps 106 and 108 may be repeated until a bare substrate is obtained.

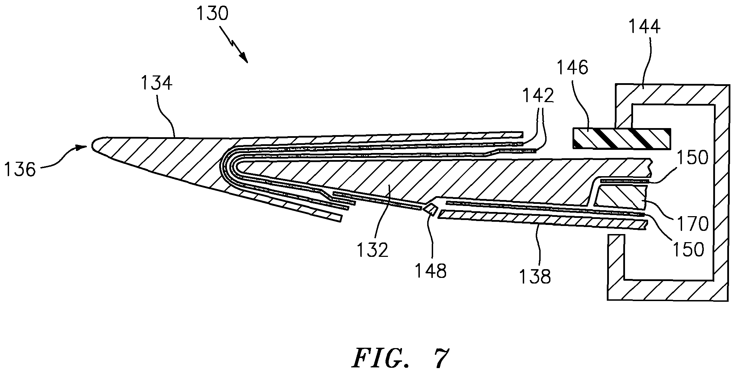

At step 110 a new anodization layer 84 is applied to the substrate surface 92. As shown in Fig. 7, the anodization layer 84 application is performed by acid anodization on an assembled blade 130 (or structural guide vane). The assembled blade 130 includes a blade body 132. The blade body 132 is coupled to a sheath 134 proximate a tip end 136 of the blade 130. The sheath 134 is electrically insulated from the blade body 132. The sheath 134 can comprise titanium alloy. A blade cover 138 is coupled to the blade body 132. The blade cover 138 can comprise aluminum alloy. A foam core 140 is protected by the blade cover 130. Adhesive 142 bonds the sheath 134 and adhesive 150 bonds the blade cover 138 and foam core 140 to the blade body 132. An electrode 144 is coupled to the blade cover opposite the sheath 134. An insulator 146 is utilized to electrically isolate the blade body 132. The electrode 144 makes contact with the blade cover 138 but is insulated from the blade body 132. The anodization process is conducted by applying the electrode 144 to the root of the blade body 132 and an electrode to the blade cover 138. The sheath 134 and blade cover 138 are left intact. New cover gutter seals 148 can be applied after anodization.

At step 112 a new bond primer layer 86 is applied over the anodization layer 84. At step 114 a new corrosion-resistant primer layer 88 is applied over the bond primer layer 86. At step 116 a new erosion coating layer 90 is applied over the corrosion-resistant primer layer 88.

The process of repairing erosion coatings for blades and structural guide vanes coated with erosion coatings provided the advantage of replacing damaged erosion coating with the fan blade assembled.

There has been provided a process to repair erosion coatings. While the process to repair erosion coatings has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A method of repairing a coating (80) coupled to a substrate (82), wherein the coating (80) comprises an anodization layer (84) on the substrate (82), a bond primer layer (86) on the anodization layer (84), a corrosion-resistant primer (88) on the bond primer (86), and an erosion coating (90) on the corrosion-resistant primer (86), the method comprising:
abrading the erosion coating (90);
abrading the corrosion-resistant primer (88);
creating an abraded surface (104) comprising a bond primer (86) over an anodization layer (84) coupled to said substrate,
chemically etching said anodization layer (84);
abrading said bond primer (86);
applying an anodization layer (84) to said substrate (82) ;
applying a bond primer layer over said anodization layer (84);
applying a corrosion-resistant layer (88) over said bond primer layer (86); and
applying an erosion coating layer (90) over said corrosion-resistant layer (88).

2. The process according to claim 1, wherein said abraded surface (104) comprises at least one of a bare metal substrate (82), an anodization layer (84) over said substrate (82), a portion of a bond primer (86) over said anodization layer (84) over said substrate (82) and an anodization layer (84) over said substrate (82) with a portion of a corrosion-resistant primer (88) over a bond primer (86) over said anodization layer (84) over said substrate (82).

3. The process according to claim 1 or 2, wherein said abrading is selected from the group consisting of mechanical abrasion, abrasive blast, grinding, sanding, laser ablation, waterjet stripping and flashlamp/CO₂ stripping.

4. The process according to claim 1, 2 or 3, wherein applying said anodization layer (84) to said substrate (82) comprises acid anodization on an assembled blade (130).

5. The process according to any preceding claim, wherein said step of chemically etching said anodization layer (84) comprises a chromic-phosphoric acid etch.

6. The process according to claim 5, wherein said chromic-phosphoric acid etch comprises removing said anodization layer (84).

7. The process according to claim 5 or 6, wherein said chromic-phosphoric acid etch facilitates mechanical removal of said bond primer layer (86) in the absence of said anodization layer (84).

8. The process according to any preceding claim, wherein a sheath (134) remains coupled to a blade body (132) and a blade cover (138) is also attached to a suction side of the blade body (132).

9. The process according to any preceding claim, further comprising removing said anodization layer (84) while leaving said bond primer (86) intact.

## Patentansprüche

1. Verfahren zum Reparieren einer Beschichtung (80), die mit einem Substrat (82) gekoppelt ist, wobei die Beschichtung (80) eine Anodisierungsschicht (84) auf dem Substrat (82), eine Haftgrundierungsschicht (86) auf der Anodisierungsschicht (84), eine korrosionsbeständige Grundierung (88) auf der Haftgrundierung (86) und eine Erosionsbeschichtung (90) auf der korrosionsbeständigen Grundierung (86) umfasst, wobei das Verfahren Folgendes umfasst:
Abreiben der Erosionsbeschichtung (90);
Abreiben der korrosionsbeständigen Grundierung (88);
Erzeugen einer abgeriebenen Oberfläche (104), die eine Haftgrundierung (86) über einer Anodisierungsschicht (84), die mit dem Substrat gekoppelt ist, umfasst,
chemisches Abätzen der Anodisierungsschicht (84);
Abreiben der Haftgrundierung (86);
Aufbringen einer Anodisierungsschicht (84) auf das Substrat (82) ;
Aufbringen einer Haftgrundierungsschicht über der Anodisierungsschicht (84);
Aufbringen einer korrosionsbeständigen Schicht (88) über der Haftgrundierungsschicht (86); und
Aufbringen einer Erosionsbeschichtungsschicht (90) über der korrosionsbeständigen Schicht (88).

2. Verfahren nach Anspruch 1, wobei die abgeriebene Oberfläche (104) mindestens eines aus einem blanken Metallsubstrat (82), einer Anodisierungsschicht (84) über dem Substrat (82), einem Teil einer Haftgrundierung (86) über der Anodisierungsschicht (84) über dem Substrat (82) und einer Anodisierungsschicht (84) über dem Substrat (82) mit einem Teil einer korrosionsbeständigen Grundierung (88) über einer Haftgrundierung (86) über der Anodisierungsschicht (84) über dem Substrat (82) umfasst.

3. Verfahren nach Anspruch 1 oder 2, wobei das Abreiben aus der Gruppe ausgewählt ist, die aus mechanischem Abreiben, Abstrahlen, Schleifen, Schmirgeln, Laser-Ablation, Abziehen mit Wasserstrahl und Abziehen mit Blitzlampe/CO₂ besteht.

4. Verfahren nach Anspruch 1, 2 oder 3, wobei das Aufbringen der Anodisierungsschicht (84) auf das Substrat (82) Säureanodisation an einer zusammengebauten Schaufel (130) umfasst.

5. Verfahren nach einem der vorstehenden Ansprüche, wobei der Schritt des chemischen Abätzens der Anodisierungsschicht (84) ein Chrom-Phosphorsäure-Ätzen umfasst.

6. Verfahren nach Anspruch 5, wobei das Chrom-Phosphorsäure-Ätzen das Entfernen der Anodisierungsschicht (84) umfasst.

7. Verfahren nach Anspruch 5 oder 6, wobei das Chrom-Phosphorsäure-Ätzen die mechanische Entfernung der Haftgrundierungsschicht (86) bei Nichtvorliegen der Anodisierungsschicht (84) erleichtert.

8. Verfahren nach einem der vorstehenden Ansprüche, wobei ein Mantel (134) an einem Schaufelkörper (132) gekoppelt bleibt und auch eine Schaufelabdeckung (138) an einer Saugseite des Schaufelkörpers (132) angebracht ist.

9. Verfahren nach einem der vorstehenden Ansprüche, ferner umfassend das Entfernen der Anodisierungsschicht (84), während die Haftgrundierung (86) intakt gelassen wird.

## Revendications

1. Procédé de réparation d'un revêtement (80) couplé à un substrat (82), dans lequel le revêtement (80) comprend une couche d'anodisation (84) sur le substrat (82), une couche d'apprêt de liaison (86) sur la couche d'anodisation (84), un apprêt résistant à la corrosion (88) sur l'apprêt de liaison (86) et un revêtement anti-érosion (90) sur l'apprêt résistant à la corrosion (86), le procédé comprenant :
l'abrasion du revêtement anti-érosion (90) ;
l'abrasion de l'apprêt résistant à la corrosion (88) ;
la création d'une surface abrasée (104) comprenant un apprêt de liaison (86) sur une couche d'anodisation (84) couplée audit substrat,
la gravure chimique de ladite couche d'anodisation (84) ;
l'abrasion dudit apprêt de liaison (86) ;
l'application d'une couche d'anodisation (84) sur ledit substrat (82) ;
l'application d'une couche d'apprêt de liaison sur ladite couche d'anodisation (84) ;
l'application d'une couche résistant à la corrosion (88) sur ladite couche d'apprêt de liaison (86) ; et
l'application d'une couche de revêtement anti-érosion (90) sur ladite couche résistant à la corrosion (88).

2. Procédé selon la revendication 1, dans lequel ladite surface abrasée (104) comprend au moins l'un d'un substrat (82) métallique nu, d'une couche d'anodisation (84) sur ledit substrat (82), d'une partie d'un apprêt de liaison (86) sur ladite couche d'anodisation (84) sur ledit substrat (82) et d'une couche d'anodisation (84) sur ledit substrat (82) avec une partie d'un apprêt résistant à la corrosion (88) sur un apprêt de liaison (86) sur ladite couche d'anodisation (84) sur ledit substrat (82).

3. Procédé selon la revendication 1 ou 2, dans lequel ladite abrasion est choisie dans le groupe comprenant l'abrasion mécanique, le décapage abrasif, le broyage, le ponçage, l'ablation au laser, le décapage au jet d'eau et le décapage au flash/au CO₂.

4. Procédé selon la revendication 1, 2 ou 3, dans lequel l'application de ladite couche d'anodisation (84) sur ledit substrat (82) comprend une anodisation acide sur une aube assemblée (130).

5. Procédé selon une quelconque revendication précédente, dans lequel ladite étape de gravure chimique de ladite couche d'anodisation (84) comprend une gravure à l'acide chromique/phosphorique.

6. Procédé selon la revendication 5, dans lequel ladite gravure à l'acide chromique/phosphorique comprend l'élimination de ladite couche d'anodisation (84).

7. Procédé selon la revendication 5 ou 6, dans lequel ladite gravure à l'acide chromique/phosphorique facilite l'élimination mécanique de ladite couche d'apprêt de liaison (86) en l'absence de ladite couche d'anodisation (84).

8. Procédé selon une quelconque revendication précédente, dans lequel une gaine (134) reste couplée à un corps d'aube (132) et un couvercle d'aube (138) est également fixé à un extrados du corps d'aube (132).

9. Procédé selon une quelconque revendication précédente, comprenant en outre l'élimination de ladite couche d'anodisation (84) tout en laissant ledit apprêt de liaison (86) intact.
